# EUROPEAN PATENT SPECIFICATION

(11) **EP 0 391 706 B1**
(45) Date of publication and mention of the grant of the patent: **27.11.1996**
(21) Application number: 90303646.5
(22) Date of filing: 05.04.1990
(51) Int. Cl.: G06F 17/22

(54) **A method encoding text**
Verfahren zur Kodierung von Texten
Méthode de codage de textes

(30) Priority: 05.04.1989 US 333504; 05.04.1989 US 333229
(43) Date of publication of application: 10.10.1990
(73) Proprietor: XEROX CORPORATION, Rochester New York 14644 (US)
(72) Inventor: Bespalko, Stephen, No. 29 Escondido, California 92026 (US); Monahan, John, Los Angelos, California 90066 (US)
(74) Representative: Johnson, Reginald George

(56) References cited:
- EP-A- 0 083 393
- EP-A- 0 098 959
- IBM TECHNICAL DISCLOSURE BULLETIN. vol. 24, no. 7B, December 1981, NEW YORK US pages 3984 - 3985 RINGLE & VAN DYKE 'Proportional Page Image Display'
- IBM TECHNICAL DISCLOSURE BULLETIN. vol. 26, no. 11, April 1984, NEW YORK US pages 6095-6096 CARLGREN 'Suffix-dependent Hyphenation Data Storage Technique'
- Communication of the ACM , vol. 23, dec 1980, no.12, New York, USA, pages 676- 687, J. Peterson : " Computer programs for detecting and correcting spelling errors"

## Description

In a typical word processing system each paragraph exists internally as one or more strings of characters, and must be broken into lines before it can be displayed or printed. For example, the typical line-breaking algorithm has a main inner loop which adds the width of the current character to the sum of the widths of previous characters, and compares the new total to the desired line width. The program will execute this loop until the number of characters in the line exceeds the number of characters that can be fitted in the line. At this point, the program can either end the line with the last full word, or hyphenate the current word and put the word portion after the hyphen at the beginning of the next line.

Two problems with this process cause it to run too slowly: first, the inner loop must be executed for every character in the line; second, if hyphenation is enabled, the context of the character that overran the margin must be deduced - that is, a determination must be made whether the character is a space, punctuation mark, or part of a word. In general, all operations that require processing of each character such as pagination and scrolling through the document are very slow. In addition, operations that depend on the interpretation of the document as a sequence of words, such as hyphenation, spell-checking and search and replace are also very slow.

US-A-4,181,972 relates to a means and methods for automatic hyphenation of words and discloses a means responsive to the length of input words, rather than characters. However this invention does not store the word length obtained for future use; at the time that hyphenation is requested, it scans the entire text character-by-character. It also does not compute breakpoints based on the whole word length. Instead, Casey teaches the use of a memory-based table of valid breakpoints between consonant/vowel combinations.

US-A-4,092,729 and 4,028,677 relate to methods of hyphenation also based on a memory table of breakpoints. '729 accomplishes hyphenation based on word length (see claim 6) but the method disclosed is different than the invention disclosed here. In it, words are assembled from characters at the time hyphenation is requested, and then compared to a dictionary containing words with breakpoints. The invention disclosed here assembles the words at the time the document is encoded, and does not use a dictionary look-up technique while linebreaks are computed.

What is required is a better method of representing the text for document processing. A natural approach for reducing the computational intensity of the composition function would be to create data structures that would enable computation a word at a time rather than a character at a time. The internal representation of the text, in this case, is a token which is defined as the pair:
<type, data>
where the type is a unique identifier for each class of token, and data are the data associated with a particular type of token. A token can be represented in a more compact way as
<type,pointer>
where the pointer is the address of the data associated with that token. This form of the token is more easily manipulated since entries are the same length. An even more compact representation of a token is achieved when the token type is included in the data block; this reduces the fundamental token object to a pointer. Since the type information is still present in the datablock, a pointer of this form is still appropriately referred to as a token. In the past, several approaches used an internal representation of text that was some form of token, and all had drawbacks that prevented them from being applied to rapid text composition.

Numerous known systems have used tokens for editing computer programs. See, for example: 'Copilot: A Multiple Process Approach to Interactive Programming Systems,' Daniel Carl, July 1974, PhD thesis, Stanford University. Swinehart uses tokens to maintain a relationship between the source code (text) and the corresponding parse tree that the compiler uses to translate the program into machine instructions. After each editing operation the lines of source code that changed are rescanned into tokens, the parse tree is rebuilt and finally, the parse tree is inspected for correctness. These systems are very popular for creating and modifying programs written in languages like Lisp, but tend to be fairly slow and laborious. The benefit to the user is that there is a greater likelihood that the changes made to a program will result in errors being removed rather than introduced.

A second known approach uses tokens as the fundamental text unit to represent English words rather than elements of a computer programming language. In Lexicontext: 'A Dictionary-Based Text Processing System,' John Francis Haverty, August 1971, MSC thesis, Massachusetts Institute of Technology, a token points to a lexicon entry containing the text for the word; a hashing function is then used to retrieve the data associated with the entry which can be uniquely defined for each token. This encoding method is very general, but at the expense of performance.

Furthermore, since a principal application of Haverty's method is as a natural language interface to an operating system, the lexicon is global and thus independent of any particular document. This architecture is practical in an environment where the information is processed on a single central processor and when the entire universe of words that would be encountered is known in advance. Even if words could be added to the global lexicon, there would still be problems in a distributed environment where processors may not be connected to a network or other communications devices. In this case, the lexicons would quickly diverge, and documents created on one machine could not be correctly interpreted on any other machine. Another major drawback of this approach is that if an error is detected in the main lexicon all of the documents encoded with the flawed lexicon would need to be reprocessed - if it was even possible to rebuild the documents. Because the main lexicon must by design be very large, it would be impractical to maintain the lexicon as resident in main memory. A large lexicon not resident in main memory would impose a tremendous performance penalty.

In the Communication pf of the ACM, vol 23, dec1980, no. 12 New York, USA, pages 676-687, J Peterson an article entitled "Computer Programs for Detecting and Correcting Spelling Errors" describes a number of spell checking methods based on the preliminary encoding of all words in text into tokens prior to the actual spell checking steps. The data associated with each token can not be used for line breaking.

EP-A-0083393 describes a test compression method based on the encoding of words into tokens. Because a number of bits are required to identify one character in ordinary text, and a number of bits are required to identify a token of a word in encoded form, a substantial compression results. However, here again, this system of encoding is not usable for line breaking.

This invention, as claimed, is a method of using tokens to represent text in a way that is specifically designed for efficiently editing text, specifically when applied to WYSIWYG editors. Rather than the tree-oriented structure that is used in the computer program editors, a simple linked list is used. The tokens point directly to the data associated with the token, thus eliminating the hashing function and, although the data blocks are of variable length, the data blocks are uniformly defined for all tokens. The dictionaries are local to each document, leading to a system that is well suited to distributed environments.

The technique could be applied to a document composition system to speed up line-breaking and other macroscopic document operations such as pagination, string search and replace, and spelling correction. This invention can also be used for improving the performance of interactive operations such as displaying typed-in characters, scrolling through the document, and resolving mouse clicks to a position in the document. The method is particularly efficient when hyphenated text is desired. Performance does not degrade when the algorithms are extended to support ligatures, kerned pairs and foreign text. This technique is extremely well suited to German text, which is more likely to contain long words, hyphenations, spelling changes which result from hyphenations, and words that must be hyphenated more than once.

The method consists of parsing the text in a document into a sequence of "atoms" which can be words, punctuation marks or spaces, and assigning a number (a "token") to each one. As an example, if the program assigns the token "301" to the word "of" the first time that word is encountered, then it will continue to assign the same number "301" to every other "of" in the document.

A table of properties is also constructed for each unique token in the document. The following is a list of the properties maintained for atoms other than spaces:
- text:: the characters in the atom
- lastFont:: a code representing the display characteristics of the font used to compute the token properties cached in this table
- displayBitMap:: the bit map of the atom text in font lastFont
- notPunctuation:: a Boolean indicating whether the atom is a punctuation mark
- atomMetrics:: a record containing the character count of the token and the width of the word in screen and printer units. This information is derived from the font referred to by lastfont.
- breakPoints:: An array with one entry for each break point in the token. If the entry is a hyphenation point, the entry contains metric information for the portion of the word prior to the hyphenation point, including the width of the hyphen. If the hyphen is a hard hyphenation point inserted by the user then the width of the hyphen is not included.
The token corresponding to a space is handled differently from other tokens. It does not have a set of properties associated with it since the rules for treating it are much different from those of other tokens.

A text processing function can proceed by using each successive token to access the current token properties. This greatly speeds up the algorithms that classically process the document a character at a time, as well as the text functions that interpret the document as a sequence of atoms.

The line-breaking algorithm can use each successive token to access the metric information in the token properties. If the line width has been exceeded, the current line will usually be terminated at the previous token. If the text is to be right justified, the interword spacing can be stretched. Finally, if the line cannot be stretched far enough, the token corresponding to the overset token will be examined to determine if it can be hyphenated.

The token-by-token method not only leads to more efficient line breaking, but also speeds up other editing functions that depend on the document being interpreted as a series of atoms (e.g. words, spaces and punctuation marks). With spell-checking, for example, no matter how many times a word is used in a document, the spelling of that word need only be checked once, since the same token will be used for each instance of the word. The algorithm proceeds in two phases. First the algorithm checks all entries in the atom table. Then it scans the document for contiguous or fragmented words.

Inserting and deleting characters as well as entire tokens from text encoded with this method is very efficient. In the case of individual characters, a special token is employed that can be quickly modified. Inserting and deleting entire tokens is even faster than individual characters since the operations involve only modifying the string of tokens. Screen painting during type-in is very rapid, since all of the operations typically involved with updating the document data-structures, determining the new line-endings, and painting the text on the screen all benefit from this technique.

The search and replace function also benefits from having to process only the text in the atom table, if it is searching for one word. If it is searching for multiple words it need only scan the document for sequences of atoms, rather than sequences of characters.

This method of encoding text also leads to a very compact external format. It is possible to segregate the token properties into basic properties and derived properties that can be computed from the basic token properties (i.e. the characters in the token and the location of break-points). Only the basic token properties need to be written out on the file. When a new edit session is started with the file, the basic properties are used to add the derived properties.

The present invention will now be described, by way of example, with reference to the accompanying tables and drawings, in which:
TABLE 1 is the source file defining the token data structure, written in the Mesa programming language;
TABLE 2 is the encoding of the text in TABLE 4 using the data structure defined in TABLE 1;
TABLE 3 is the source file defining the data structures to represent token properties, written in the Mesa programming language;
TABLE 4 is a sample text passage used in the examples;
FIGURE 1 is the memory layout for the token properties defined in TABLE 3 for a token that has no break points;
FIGURE 2 is the memory layout of the token properties defined in TABLE 3 for a token that has two break points;
FIGURE 3 is a diagram of the parameters defining the display bitmap portion of the data structures in TABLE 3;
FIGURE 4 is a diagram showing the order in which tokens are processed when hyphenation is enabled, using text from TABLE 4;
TABLE 5 is the source file for the definitions of the line-breaking algorithm that processes text encoded as tokens, written in the Mesa programming language;
TABLE 6 is the source file for the implementation of the line-breaking algorithm for breaking lines of text encoded as tokens, written in the Mesa programming language;
TABLE 7 is the equivalent of the Mesa source code in TABLE 6 written in the C programming language.
TABLE 8 is the result of the algorithm defined in TABLE 6 on the first three lines of the text in TABLE 4;

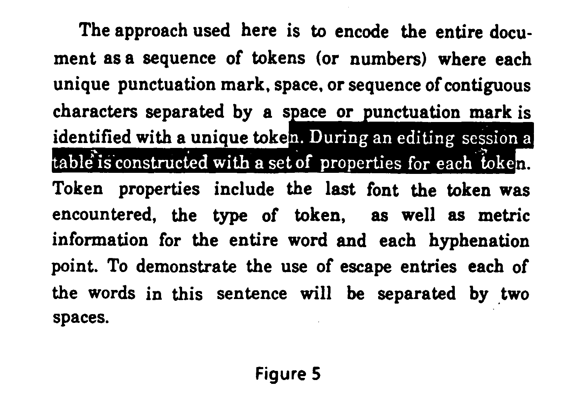

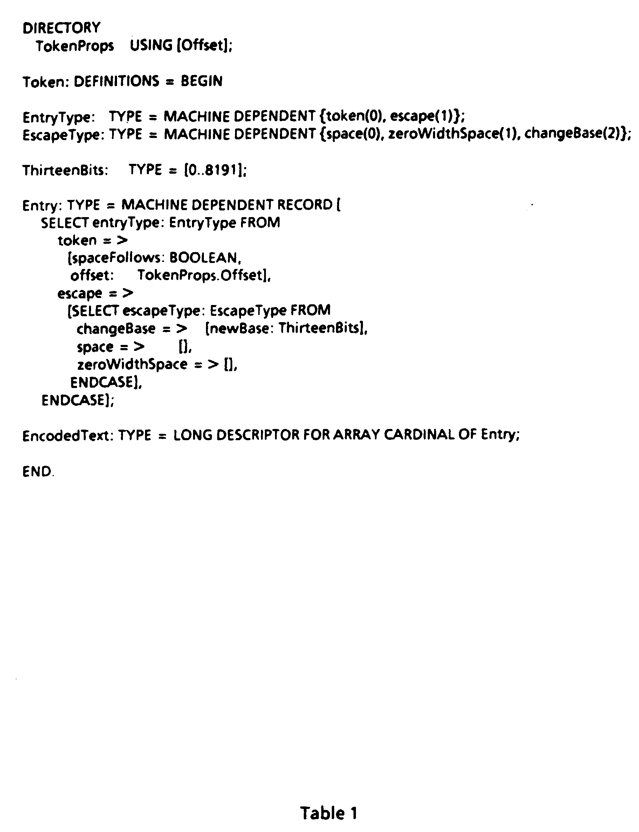

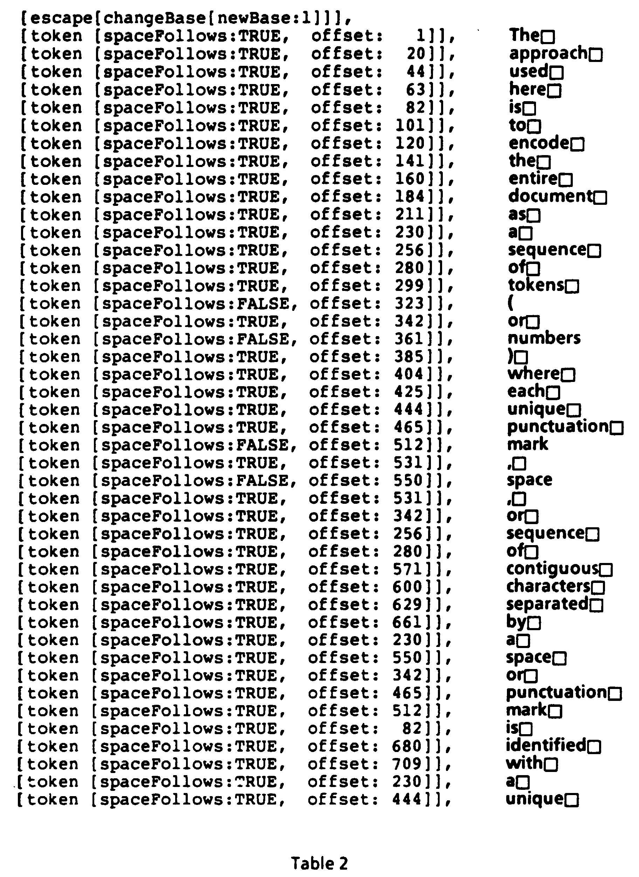

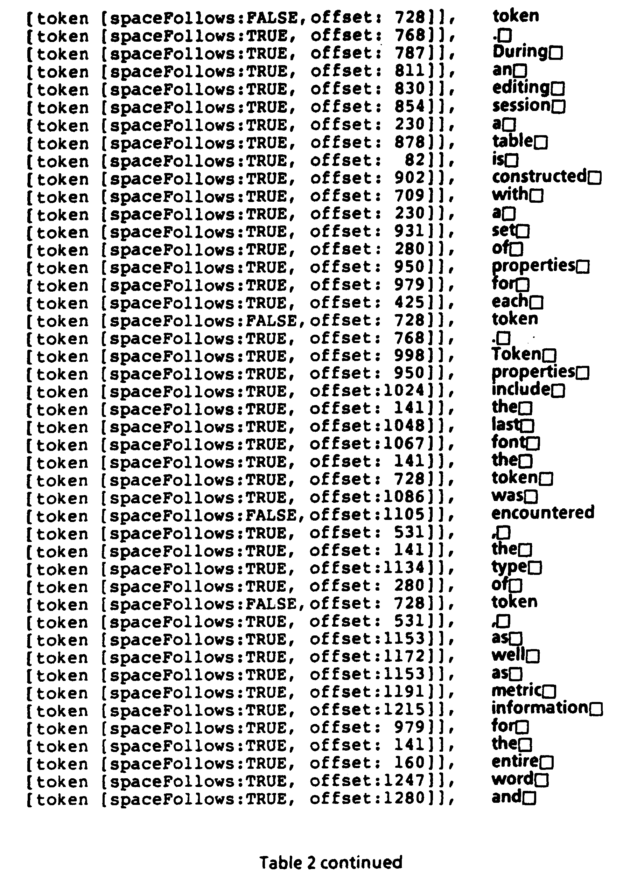

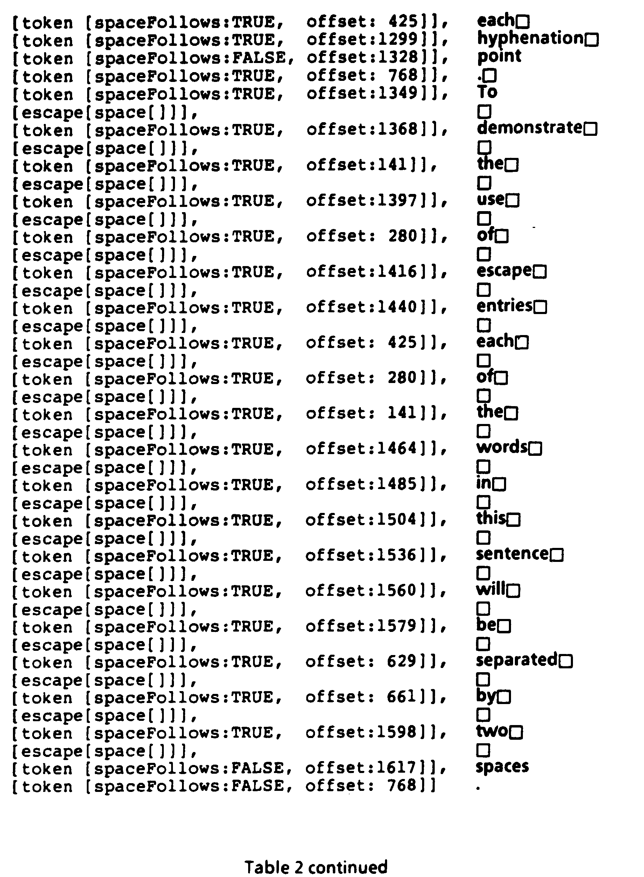

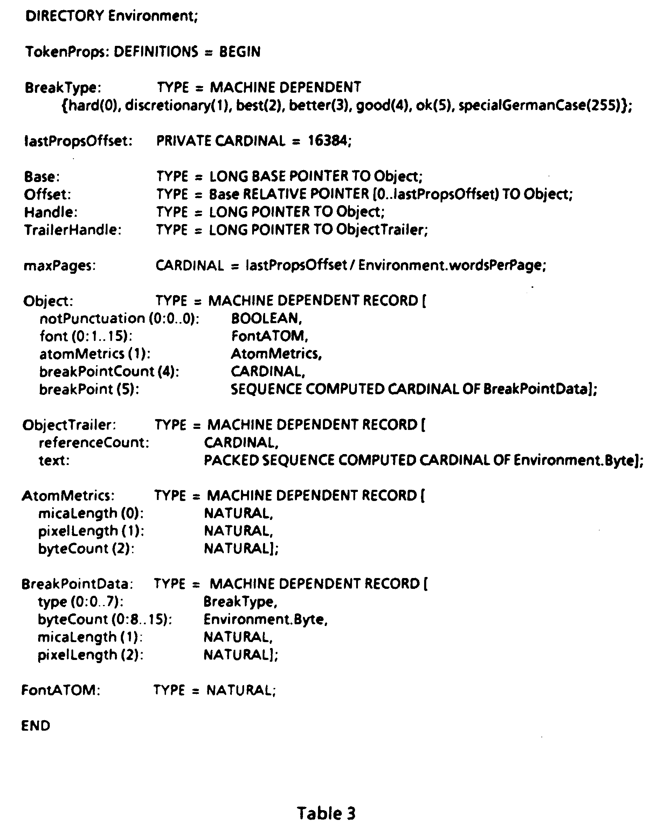

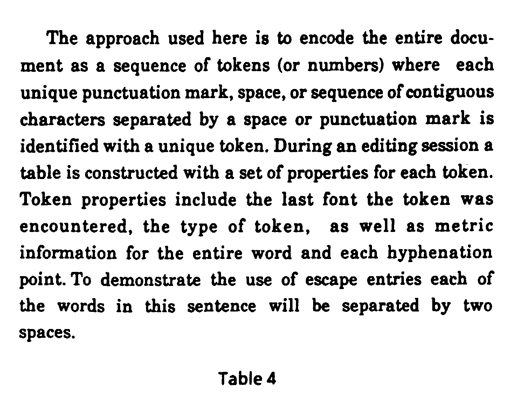

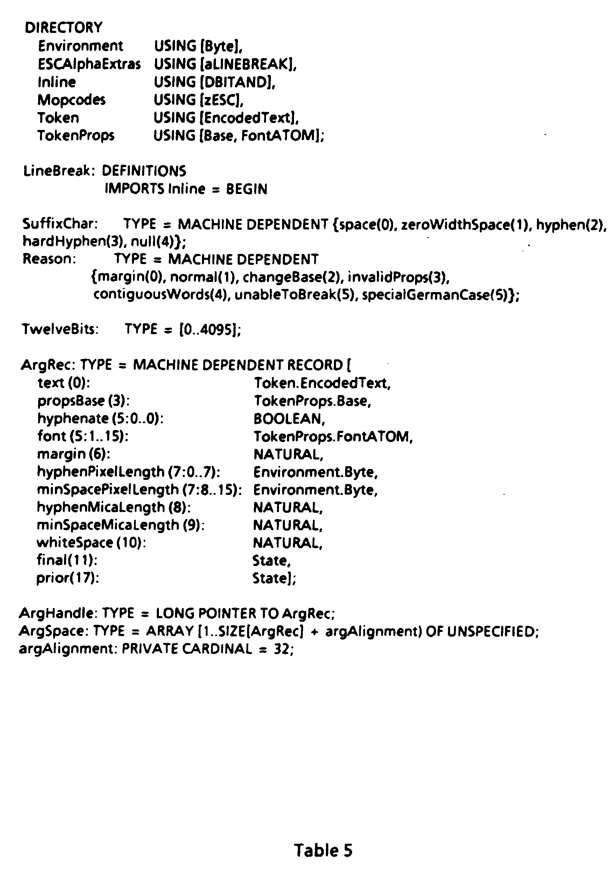

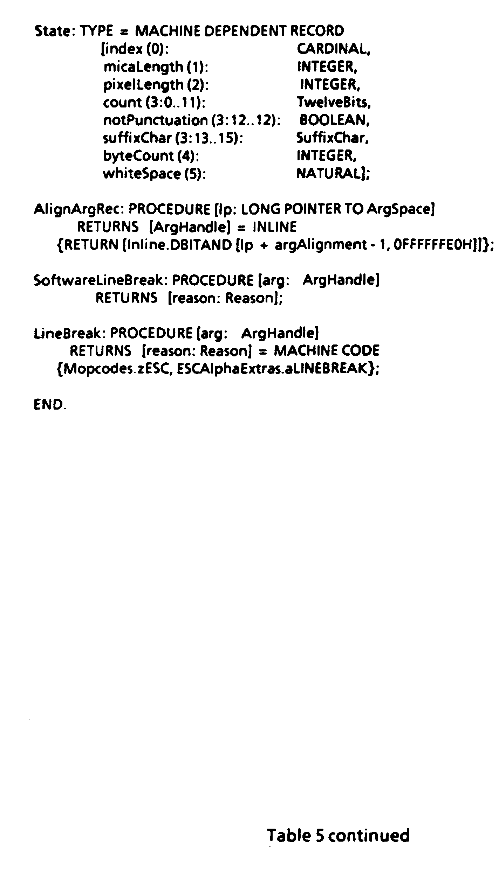

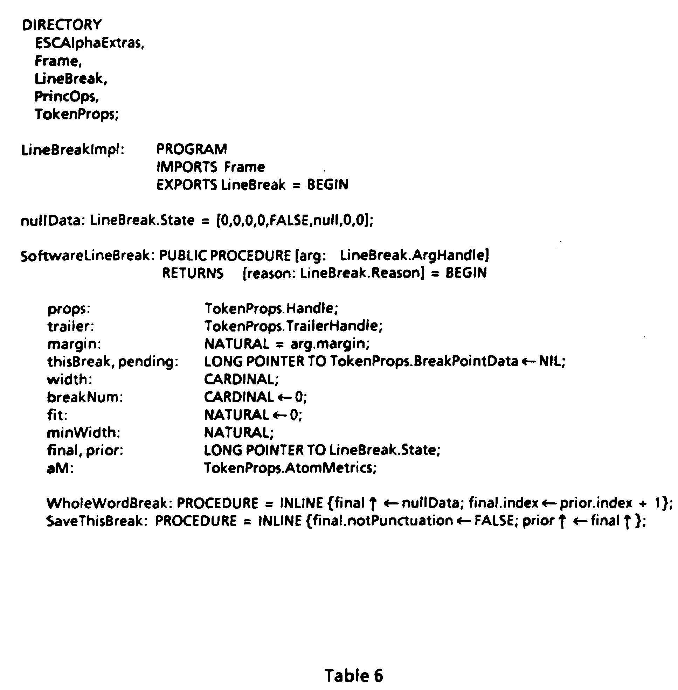

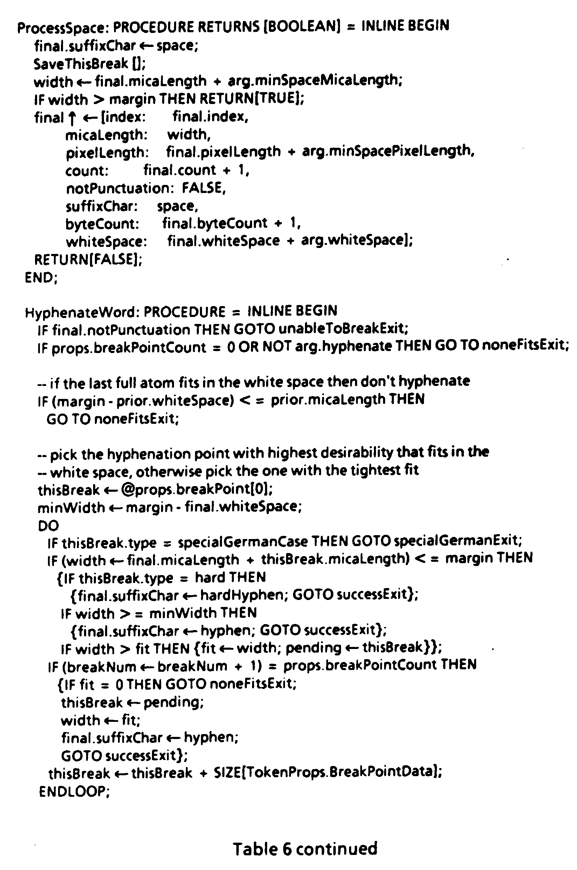

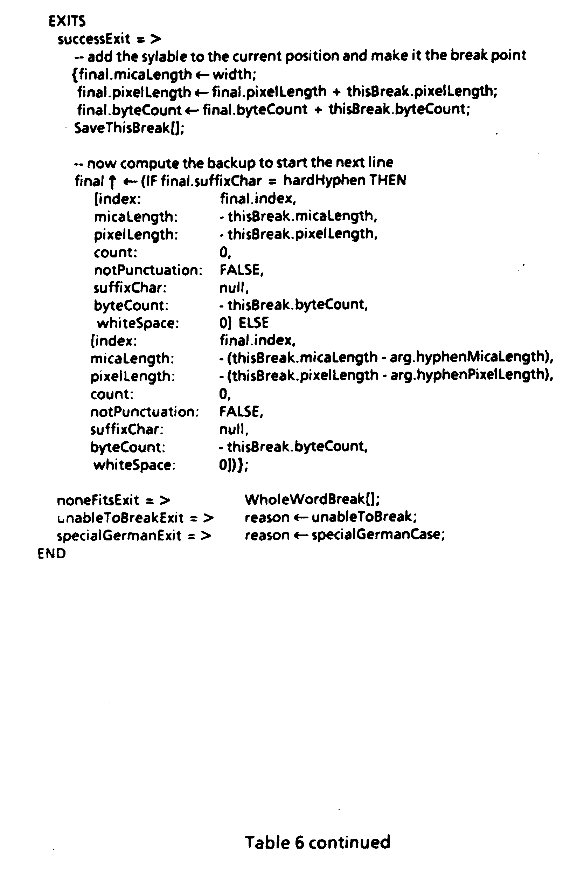

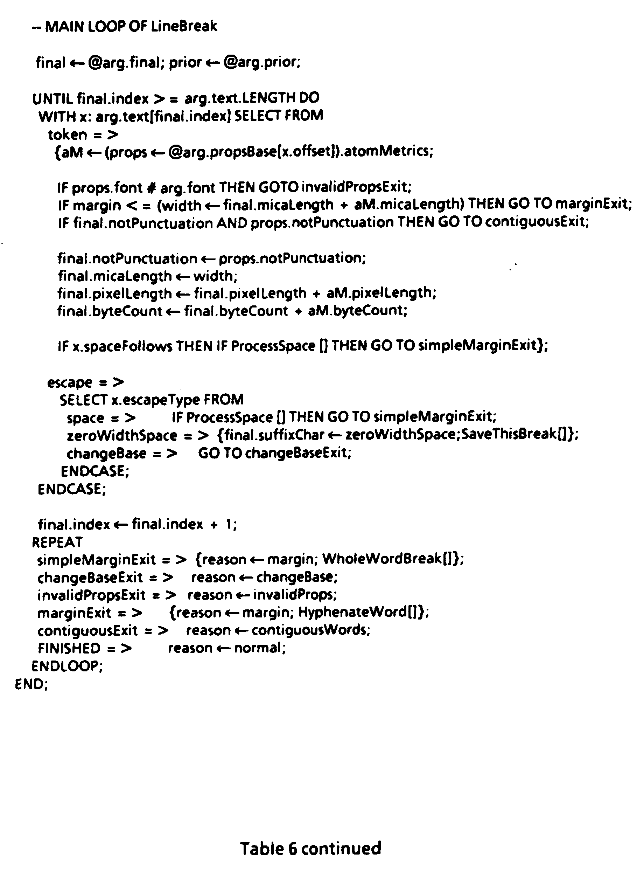

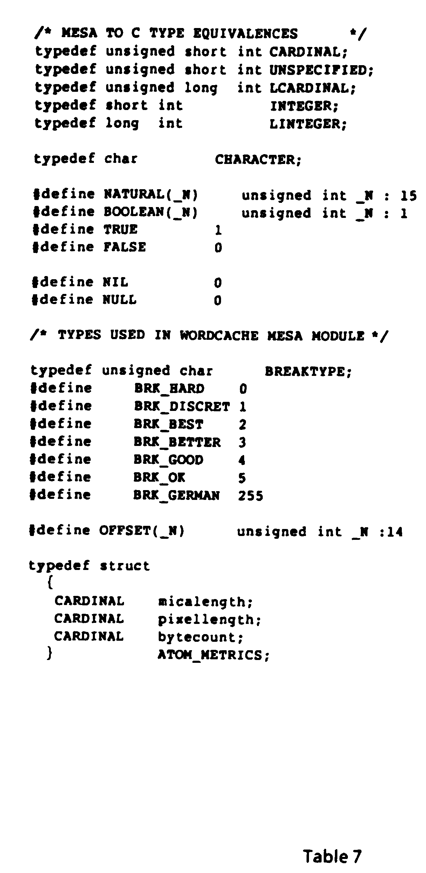

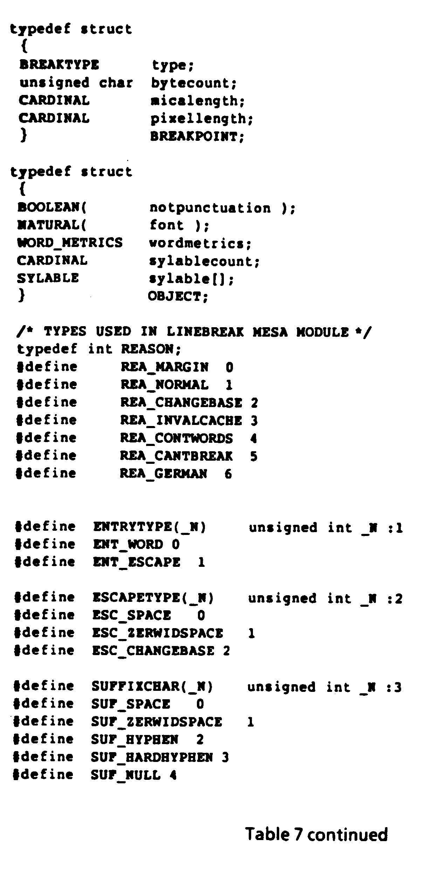

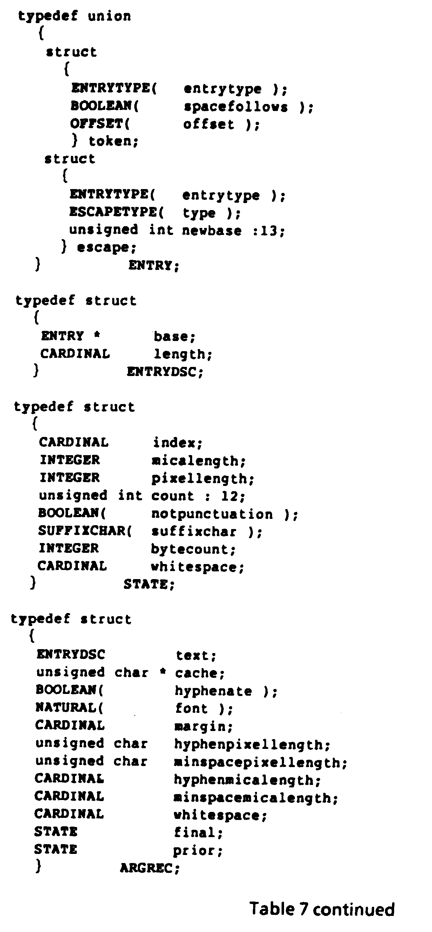

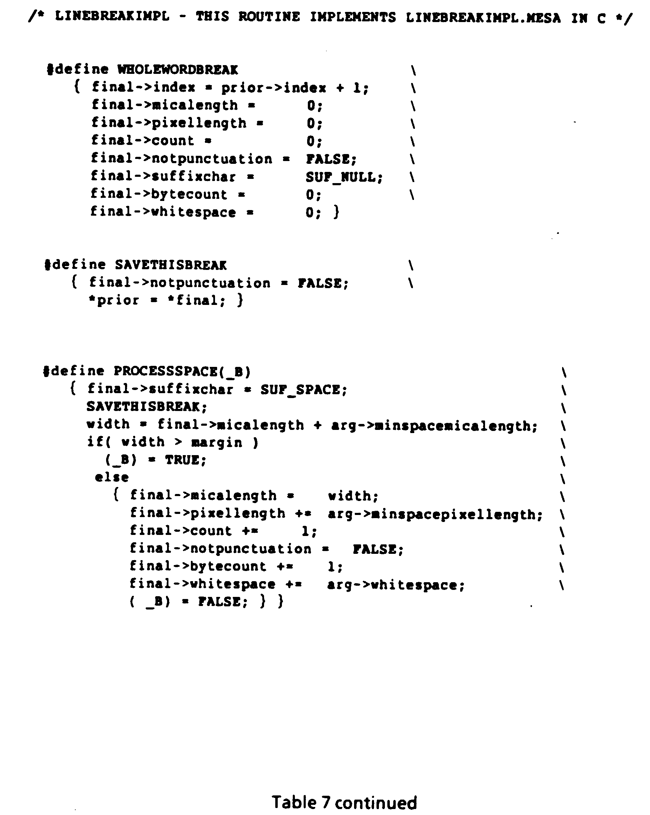

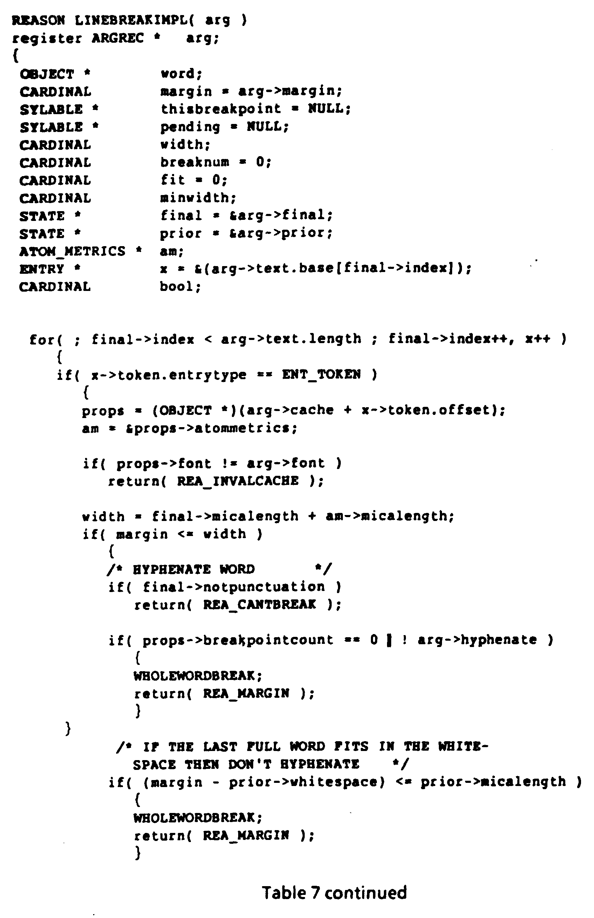

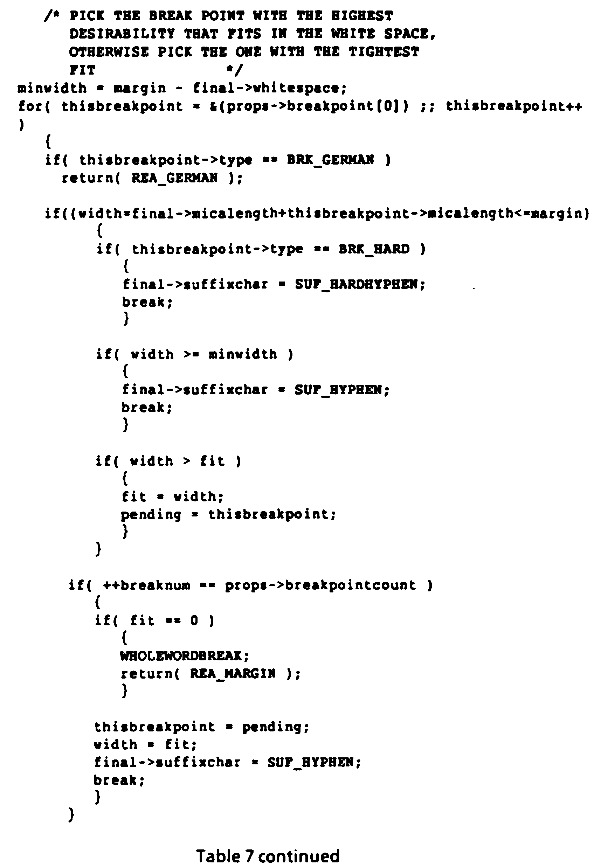

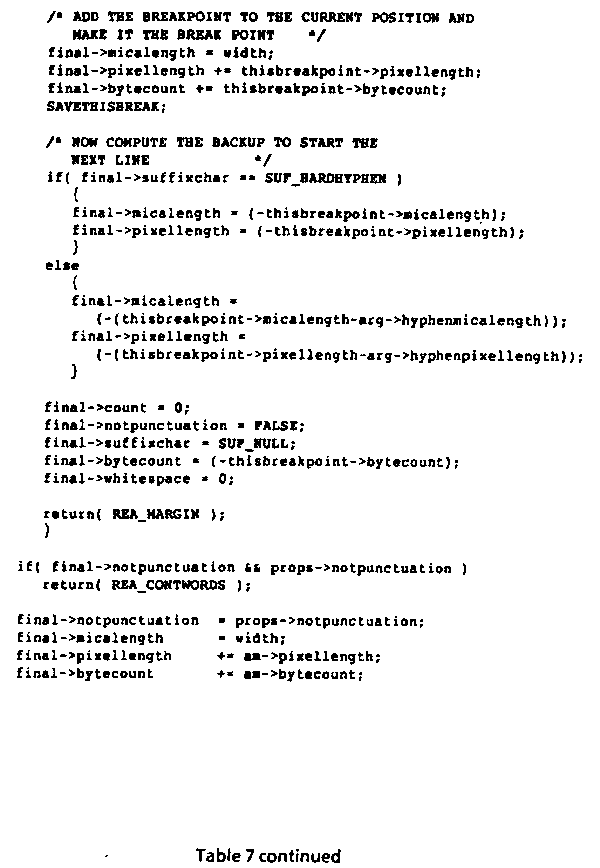

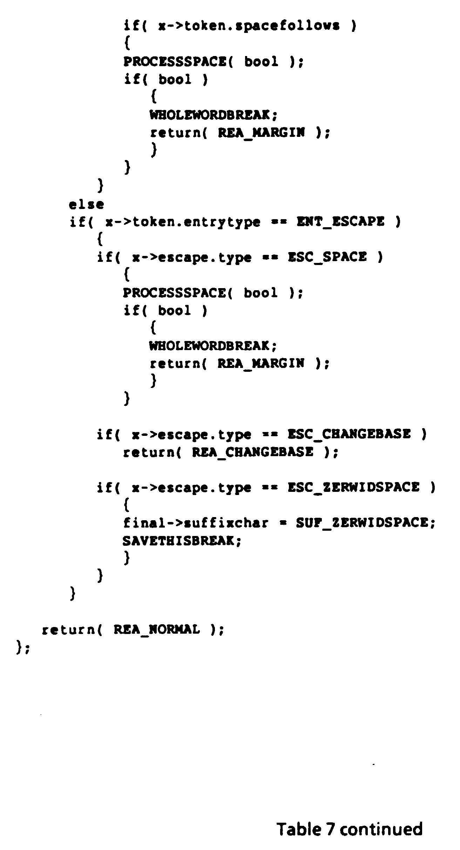

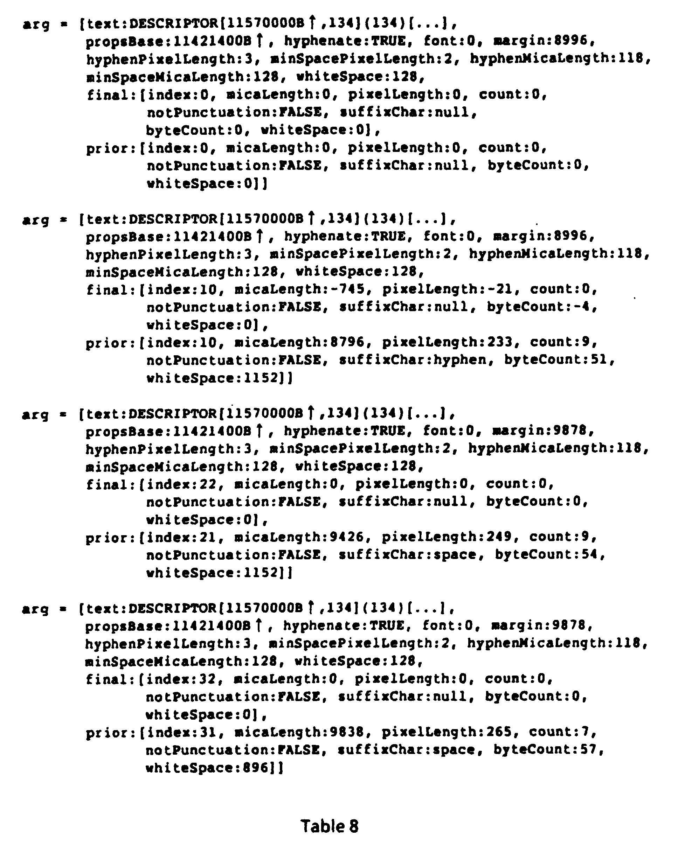

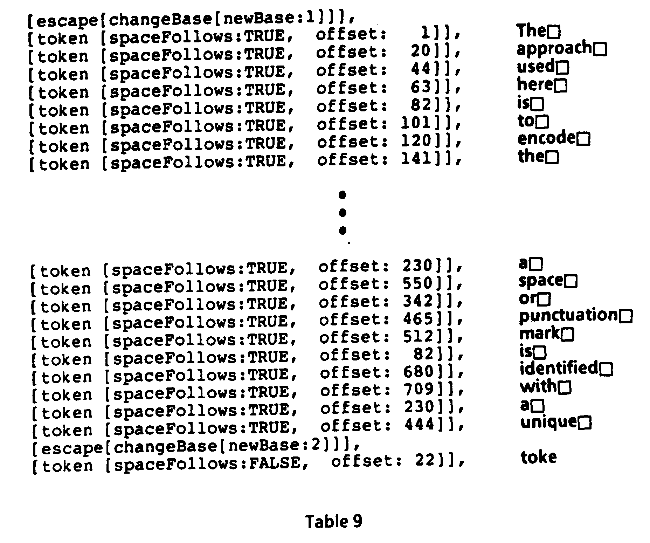

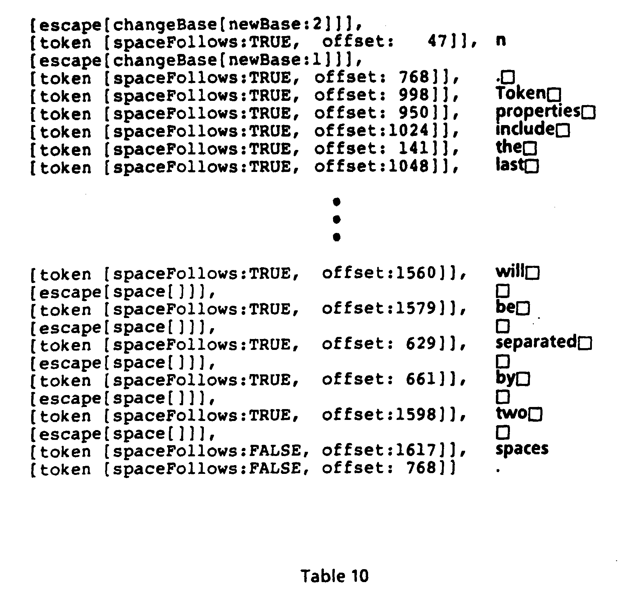

FIGURE 5 is the text in TABLE 4, with a portion of the text highlighted to represent a selection;
TABLE 9 is the initial fragment of the encoded text in TABLE 2 that remains after the text selected in FIGURE 5 is deleted, and
TABLE 10 is the final fragment of the encoded text in TABLE 2 that remains after the text selected in FIGURE 5 is deleted.

Encoding text using the method of this invention consists of parsing the document into atoms and building arrays of tokens that correspond to the atoms. A small number of entries in the arrays are not tokens. These are special entries that are required for encoding infrequent sequences of characters (like consecutive spaces) and for encoding very large documents.

The text in Table 1 consists of the type definitions for the data structures needed to encode text into tokens. The computer language used in Table 1 is Mesa. Mesa is similar to Pascal and Modula II. The directory clause declares that the type Offset from the interface Token is used in LineBreak.mesa. Next,the file is declared as a DEFINITIONS file since the function of the file is to define data-types and procedures.

The data structure defining the encoded array of tokens is EncodedText. Each element in the array is an Entry. Each Entry in the encoded text fits in one word of memory. The Entry is a record that has two variants: a token or an escape.

The token variant consists of two fields: the number corresponding to the atom the token refers to, and a Boolean term indicating whether or not a space follows the token. To maximize the performance, the token assigned to each atom is chosen in such a way as to allow it to be used to determine the location in memory of the properties for that token.

The escape variant of the Entry record is itself a variant record. This variant is used to encode information that cannot be represented with token entries.

The changeBase escape variant is required to encode large documents. Since the offset in the token variant consists of only 14 bits, the number of tokens that can be directly addressed is limited. The changeBase escape allows the address space for token properties to be changed, and thus allows a very large number of token properties to be addressed.

The space escape variant is used to represent consecutive spaces. This is needed because the token entry can only encode whether a single space is following an atom. The space variant has no parameters.

The zeroWidthSpace escape variant is used to represent a non-hyphenating break point in an atom. This is a seldom-used feature in the XICS markup language. The zeroWidthSpace variant has no parameters.

Table 2 is the list of tokens that would be created from the text of Table 4. The table consists of the contents of each entry of the encoded text, one entry per row of the table. For the sake of clarity, the text for each token is included immediately to the right of each token Entry in Table 2. The first row of Table 2 contains an escape Entry that is a changeBase variant. It sets the address space for the token properties to the first address space. The address of the token properties is computed by combining the base address defined in the changeBase entry and the offsets in the token entries. The second row of the table contains a token variant entry. There are two items for each atom: a number identifying the atom, and a bit indicating whether there is a space after the atom In this coding scheme, the space between atoms is part of the preceding atom. For example, the first word "The" is assigned the values
[spaceFollows: TRUE, offset: 1].
Similarly, the second word, "approach" is
[spaceFollows: TRUE, offset: 20].
The ninth entry is the word "the" again, but with a lower case "t". This atom can not be given the same token as the original "The" which had a capital "T" because the widths of the characters will not usually be the same. The 17th entry is a left parenthesis. It is coded as
[spaceFollows: FALSE, offset: 323].
The 29th item on the list, the word "or" is the same word as the 18th word on the list. They will have identical properties and will therefore use the same token. Likewise, the commas of entries 26 and 28 will have the same tokens.

Each token has an associated list of properties, as shown in Table 3. The set of properties is made up of two records: the Tokenprops.Object and an instance of the record Tokenprops.Trailer. Both of these records are declared as MACHINE DEPENDENT to force the Mesa compiler to pack the fields into as few words of memory as possible. By ordering the values in terms of decreasing frequency of access, the number of memory references needed to access the token properties could be minimized. Since in the Mesa programming language indeterminate length arrays can be located only at the end of a record, two records were required to achieve the optimal order.

The first field in the Object record is a Boolean term which indicates whether the atom is a punctuation mark. This field is used during line-breaking computations to determine where legal breaks can occur.

Next is a number identifying the style, size, stress and weight of the font. This number represents the last font from which the values of the atomMetrics, breakPoint array (if present) and the display bitmap were computed. Thus if the current font in which the atom is being processed is the same as the last font in which the atom was processed, the values in the property records are simply accessed and not recomputed, since the values are still correct. Otherwise, the values in the property records must be recomputed prior to processing the current token.

The third field is called the AtomMetrics and is also defined in the Tokenprops interface. This record contains the metric information for the entire atom. The values in the AtomMetrics record are the length of the atom in micas (a machine- independent unit defined as) and pixels (screen units) and the length of the atom text in bytes. English text would typically require one byte for each character, but more bytes per character may be required in another language or for representing special technical symbols. See 'The Xerox Character Code Standard' for a method of encoding international characters and special symbols that would require more than one byte per character.

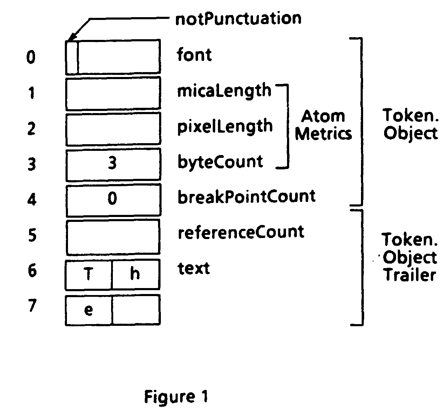

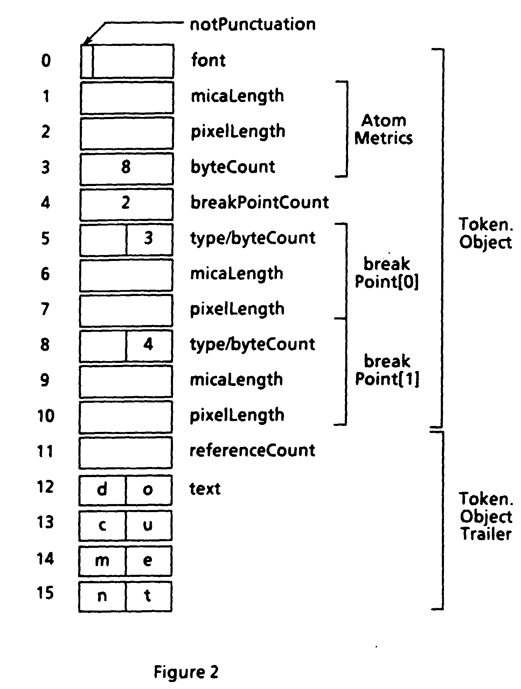

Following the atomMetrics is the breakPointCount, which corresponds to the number of places an atom can be broken between lines. Break points are usually determined by hyphenating a word. A word may also include manually-inserted zero-width spaces. In this encoding technique, the atom "the" has no break points. The last field in the Object is the breakPoint array. This array may be omitted altogether if there are no break points in the atom. Figure 1 shows the memory layout of the properties for the atom "the". If there are break points in the atom, each element of the breakPoint array will consist of the first parts of the divided words that can be formed by hyphenating the original word. For example, the three-syllable word "document" will have two break points: information to describe "doc-" and "docu-". This is shown in Figure 2.

The first element in each breakPoint array entry consists of the break point type, which is a parameter representing how desirable the break point is. This is used by the line-breaking algorithm. The byte count is the byte count of each alternative. Length is the length of each alternative in machine-independent units and in pixels.

The second record describing the properties is the objectTrailer record. The trailer record is always present in the token properties.

The first field in the objectTrailer is the referenceCount. This is used by the editor's dynamic memory manager to determine when to free the space for a set of properties. Typically this is done when the reference count reaches zero.

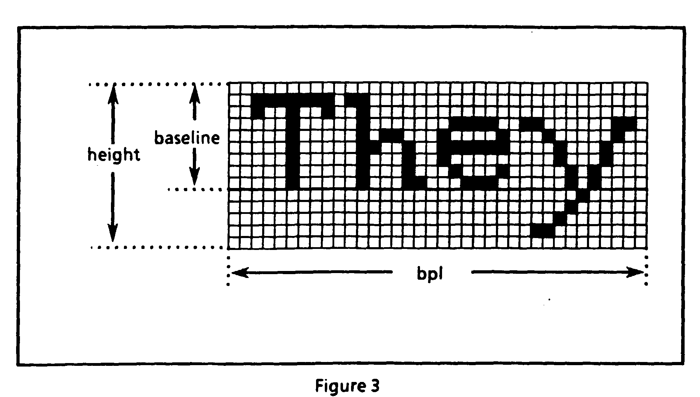

The next field is the raster. The raster is a record called RasterData and is the information that describes the cached screen resolution image of the atom. The first item, bpl, is the total pixels in each horizontal scan line. If the bit map, for example, is divided into sixteen-bit words, this number will typically be a multiple of sixteen bits even if the image of the atom occupies a smaller "width" as for the individual letter "i". The actual width of the image in pixels is stored in the atomMetrics. The second item is the total number of words of memory that are required to store the entire bit map for this atom. For example, if the width in pixels of an atom is thirty bits and an image is 14 pixels high, then the bitmap will require 28 words. This number is derived as follows:
height ∗bpl/bits-per-word
where the bpl is defined, by convention, to be the smallest multiple of the bits in a word of memory that is greater than or equal to the width of the image. The height is the height of the image. The baseline is the number of scanlines down from the top of the image to the scanline that the text will appear to sit on. Bits is a two-word pointer to the first word of the image. See Figure 3 for a graphic representation of the fields in the RasterData record.

The final field of the Trailer record is called text. This is an array containing the characters in the token. The array length is stored in the AtomMetrics, defined above. To optimize searching for tokens, the number of bytes allocated for the text field may actually exceed the number of characters in the token. The number of characters allocated will usually be a multiple of two or four, depending on the particular machine the algorithm is implemented on.

Table 5 is the Mesa source code which defines the data and procedures for computing line breaks. The directory portion of the file defines the elements of other interface files that are referenced in LineBreak.mesa. LineBreak.mesa is declared as a DEFINITIONS file since the function of the file is to define data-types and procedures.

SuffixChar is a type that defines possible final characters that can appear at the end of a line of text. This is required for the display algorithm. SuffixChar is declared as machine-dependent to ensure that the values assigned to each element in the enumerated type are consecutive and begin with 0.

Reason is an enumerated type that lists the possible reasons that the line-breaking algorithm can return. Reason is also machine-dependent since the line-breaking algorithm depends on the particular values the compiler assigns to each element in the enumerated type. The following table defines each of the values of Reason:
- margin: the current token has exhausted the line measure and a line-breaking decision has been made. This means that a line break was identified that satisfied all of the constraints placed on the algorithm.
- normal: the current block of text has been exhausted with no line-breaking decision being made.
- changeBase: the current token is a changeBase escape
- invalidProps: the properties for the current token are out of date and need to be recomputed with the current font
- contiguousWords: the current token is not preceded by a space or punctuation mark. This usually implies that the two tokens are fragments of a single word. This result enables the client code to adjust the metric information for kerning and letterspacing, as well as to keep track of the beginning of the fragmented token in case a sequence of token fragments needs to be hyphenated.
- unableToBreak: a line-breaking decision could not be made even though the current line measure has been reached. The most common event that causes this result is that the token that overruns the margin is a punctuation mark.
- specialGermanCase: this reason is returned when the line-breaking algorithm attempts to break a token that requires respelling at the desired hyphenation point.

TwelveBits is a type that defines a twelve-bit unsigned integer. It is used in the StateRec record that is described below.

ArgRec is a machine-dependent record which is the argument to the line-breaking algorithm. It is machine-dependent because, where possible, several fields in the record are packed into a single word of memory.

The first field in the record is called text, which is a descriptor representing the array of tokens to be processed. The descri ptor occupies three words of memory, with the first two words consisting of a pointer to the first token and the final word defining the length of the array.

The field propsBase is the base address used to resolve the relative pointers embedded in the token entries of the encodedText array. See Table 2 for an example of an encoded text passage. After the propsBase is a Boolean term called hyphenate. If 'hyphenate' is TRUE then the line-breaking algorithm will attempt to hyphenate the token that crosses the line measure; otherwise the algorithm backs up to the last complete token that fits in the measure. The next field represents the style, size, stress and weight of the font being processed. If the font field in the ArgRec does not match one of the font fields in the tokenProps, then the algorithm returns with a reason of invalidProps. The field after font is the margin, which is the line measure in micas.

The next two fields in the ArgRec are the hyphenPixelLength and the minSpacePixelLength. These, respectively, define the width a hyphen and the minimum width a space can be in screen units (pixels). The next two fields are the width of a hyphen and the minimum width of a space in micas.

The whiteSpace field defines the maximum size of a space in micas. It is not neccessary to define also the maximum size of a space in pixels, because only the mica measure is used in making a line-breaking decision.

The final two fields in the ArgRec are called 'final' and 'prior'. Both of these are instances of the LineBreak.State record. These fields will be referred to in Mesa notation as 'arg.final' and arg.prior', respectively. These values in these records are used by the line-breaking algorithm for temporary storage and to record the result when a line-breaking decision is made. The values in the arg.prior represent the last break point passed in the current block of text. Similarly, arg.final contains the data for the final token that was processed before the current exit of the line-breaking algorithm. If a line-breaking decision has been made, then the values in arg.prior contain the values for the end of the current line, and the values in arg.final are those to begin the next line.

The first field in the LineBreak.State record is the index. This is the index of the current token relative to the beginning of the encodedText. The micaLength and the pixel Length are the cumulative widths in micas and pixels, respectively, of the tokens allocated to the current line. Note that these are specifically not the cumulative widths of the tokens in the current text block. The next field is the count of the blanks encountered on the current line. After the blank count is a Boolean term called 'notPunctuation'. This field indicates whether the last token was a punctuation mark or not. This field is used to determine the locations of legal break points in a line. The suffixChar is a code representing the last character on a line after a line-breaking decision is made. The possible values of suffixChar were previously defined in the enumerated type SuffixChar. The byteCount field is the total number of bytes in the tokens that have been allocated to the current line. The final field, whiteSpace, is the maximum amount of white space that the line-breaking algorithm can allocate to the line when making a line-breaking decision.

ArgHandle, Argspace, and argAlignment are three types that define data structures needed to align the ArgRec in memory in such a way as to avoid crossing a page boundary. This invariant is an optimization used by the micro-code implementation on the Xerox 6085 workstation. Since ArgRec is 23 words long, the record must start on a 32 word boundary to guarantee that it does not cross a page boundary. Argspace defines a block of memory 55 words long - which guarantees that there is a 32 word boundary in the range, with sufficient space after the boundary to contain the entire record. LineBreak.AlignArgRec is a procedure that takes as an argument a pointer to one of the 55 word blocks of memory, and returns a pointer to the 32 word boundary that is contained in the block.

LineBreak.SoftwareLineBreak and LineBreak.LineBreak define the Mesa and micro-code versions of the line-breaking algorithm that will be defined in the next section. The two procedures return the same results, the difference being that the latter is implemented as a custom machine instruction on the 6085. The argument to both of these procedures is a pointer to the ArgRec, and both return a LineBreak.Reason.

Table 6 is the contents of the file LineBreaklmpl.mesa. This file supplies the implementation of the interface LineBreak. The list of names in the DIRECTORY section of the file declares the names of interface files that are referenced in LineBreaklmpl. In the next source statement, LineBreaklmpl is declared as a program (rather than a definitions file as before) which uses (IMPORTS) a subprogram from the interface Frame, and shares (EXPORTS) a program *via* the interface LineBreak. A constant null Data is declared immediately after the PROGRAM statement.

### The Linebreaking Algorithm

SoftwareLineBreak computes line endings based on the margin stored in the argument arg. The program is designed to handle cases that require more than one block of text in the same line. The design is also independent of the method that the application using the program uses to store the text. The main procedure is organized to include four nested subprograms.

WholeWordBreak is the logic that is used when a line-ending decision is made at the end of a whole word or at a space. WholeWordBreak initializes data in arg.final to refer to the beginning of the token after the one that ends the current line. This procedure is declared as an INLINE procedure to indicate that it is to be treated as a macro, which implies better performance for short procedures.

SaveThisBreak is a procedure that transfers the contents of arg.final into arg.prior. The logic may need to revert back to the values in arg.prior if the next token can not be added to the current line. This procedure is also declared to be an INLiNE for the sake of performance.

ProcessSpace checks to see if the current space will fit on the line. If not, then processing is terminated and the routine returns a TRUE value. If the current space fits, then the data in arg.final is modified to reflect the values at the current point. In this case, the routine returns a value of FALSE. ProcessSpace is also treated as a macro to optimize performance.

Hyphenateword is the subprocedure that is executed when the margin is crossed by a token. The algorithm branches to the unableToBreak exit clause if the last token that was processed was not a punctuation character. This exit results in the reason being set to unableToBreak. In this context a space is considered as a punctuation character. Similarly, if there are no break points to choose from, or if hyphenation is not selected for the current block of text, then the algorithm exits through a branch to the noneFitsExit clause. If this path is executed, then the last token processed is selected as the break point, and the values of final are initialized with the procedure WholeWordBreak.

At this point the algorithm has determined that hyphenation points exist and that it is appropriate to try to select one of the break points. Before entering the main loop two variables are initialized. The first is a pointer to an element of the break-point array. This variable is initialized to point to the first element of the break-point array in the token being broken. The second variable is the minimum width that the text including the portion of the final token must be to satisfy the white space constraint.

The main loop in HyphenateWord selects the best possible break point from the break points in the list. The algorithm requires that the break points be sorted on two keys: first in descending order of priority (in other words the most-desirable breaks come first) and within each class of priority, decreasing order of position in the token. This ordering allows the algorithm to detect the optimal break point with a single pass over the break points. The optimal break point is the one with the highest priority and that results in the tightest fit for the line.

Three exceptions cause the algorithm not to select the break point based on the highest priority and tightest-fit criteria. The first exception is for a special case break point such as a German word that would require respelling if the break point were selected. The second exception is if there is a manually-inserted or "hard" hyphen. In that case the manually-inserted hyphen is chosen whether or not it gives the best fit. The third exception is if all of the break points are too large - that is none results in at least the minimum whitespace - then the algorithm terminates without selecting a break point and the boundary of the previous token is used for the termination of the line.

If a suitable break point is selected, HyphenateWord exits through the successExit clause. The first four statements of the clause update arg.final and arg.prior fields, respectively, to reflect the break point that has been selected. Next, arg.final is updated to represent the part of the token beginning the next line. The manner in which arg.final is updated depends on the type of the selected hyphenation point. If the break point is a synthetic hyphen generated by the break-point logic, the break-point metrics must be adjusted since the hyphen is not actually part of the token. The most common hyphens that are not synthetic are hard hyphens.

When any form of hyphen is chosen to terminate a line, micaLength, pixelLength, and byteCount are all assigned negative numbers representing the portion of the token ending the previous line. The value of index remains unchanged, so that the same token begins the next line. When the negative values in arg.final are added to the values for the entire token, the results are the proper values for the portion of the token beginning the new line.

The main part of SoftwareLineBreak begins with the initialization of pointers to arg.final and arg.prior. The main loop is executed as long as arg.final.index is less than or equal to the length of the current text block, arg.text. The processing that is done on each token entry in arg.text depends on the type of the token entry.

If the type is a token entry, then the first statement in the token branch of the variant select statement removes references from several of the levels of indirection to speed processing. Next, the font that is desired for this text block is compared to the font that was last used to compute the atom metrics. If the font is incorrect then the main loop exits through the invalidProps clause which in turn causes a return from the procedure with a reason of invalidProps. This gives the us an opportunity to recompute the token properties and restart the procedure. If the properties are still valid then the computation is made to determine whether the entire token fits on the current line. If it does not, then the loop exits through the marginExit clause, and hyphenation is attempted. If the token fits, then a check is made as to whether the algorithm has encountered two consecutive tokens without either a space or a punctuation mark. If so then the loop is exited through the contiguousExit clause.

At this point it has been determined that the current token fits on the line and that it can be added to the line. The next four lines of the main loop update arg.final to reflect this. The final statement in the clause checks whether the spacefollows Boolean term is TRUE for this token. If it is, then the ProcessSpace subprocedure is executed. If the space does not fit on the line, then the main loop is exited through the simpleMarginExit, since it is clear that hyphenation is not needed. If the space fits, then the token branch of the select statement is exited, final.index is incremented, and the next entry in the text block is processed.

The other branch of the variant select statement in the main loop is executed if the text entry is an escape variant of the Token. Entry record. As was described in Table 1, the escape variant is itself a variant record (refered to as an anonymous record in Mesa). Therefore, the escape arm of the select statement is also a select statement. As mentioned previously, the three variants of this record are space, zeroWidthSpace, and changeBase.

Processing for the space variant consists of executing the ProcessSpace subroutine. If the space does not fit on the line then the main loop is exited through the simpleMarginExit clause. When a zeroWidthSpace is encountered the final.suffixChar is updated to reflect this. The current position on the line is made a viable break point in case the next token does not fit. A changeBase escape causes an exit from the main loop through the changeBase exit clause. No other processing is needed, since the us updates all of the necessary data structures including arg.propsBase. If the processing on the escape entry is completed without an exit being executed, then the clause is exited, final.index is incremented and the processing of the next text entry is begun.

If the entire text block is processed without making a line-ending decision, then the procedure exits through the FINISHED exit clause of the main loop.

Table 8 shows the values in the argRec prior to beginning processing of the text in Table 4, and then after each of the first three lines that were computed. In the first instance the value for text is the descriptor that represents the encoding in Table 2. The values have been deleted for the sake of brevity. The values for font, margin, hyphenPixelLenght, minSpacePixelLength, hyphenMicaLength, minSpaceMicalLength and whiteSpace are all set for a 10 pointserif font. The values of final and prior are all set to initial null values since no tokens have been processed.

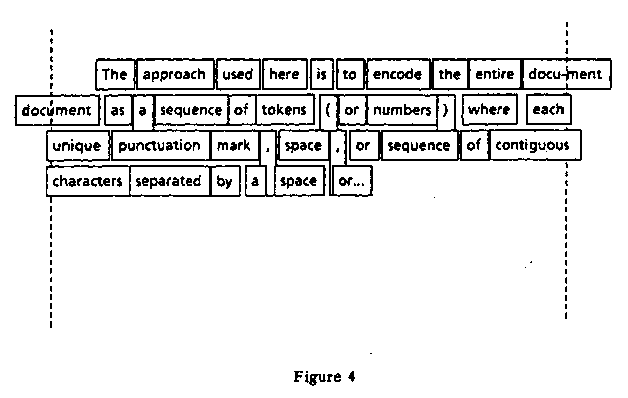

The second value of arg in Table 8 corresponds to the values in arg after the first line has been computed. Only the values in final and prior have changed. The final.index and the prior.index are the same, since the last token on the first line was hyphenated. Notice that in Table 2 the tenth entry (starting with the first element as number zero) corresponds to the token "document". The values in arg.prior correspond to the accumulation of the first ten tokens plus the portion of the eleventh token through "docu". The negative numbers in arg.final correspond only to the portion of the last token included in the values of arg.prior. When these values are added to the first token of the next line (which will be the values for the entire word "document") the result is that the proper part of the word, "ment", is added to the line values. This is shown graphically in Figure 4. By processing the same token twice when the line-breaking decision requires splitting a token across two lines, the code that calls SoftwareLineBreak can be written with logic that is largely independent of whether hyphenation has occurred. This invariance results in very efficient pagination code.

After the second line is computed, the values in arg will be those in the third value of arg in Table 8. Notice that in this block the value of margin changed to reflect that the second line was not to be indented. Since the second line is not hyphenated, the values for arg.final.index and arg.prior.index are different. This is appropriate since the second line ends on entry 21 which is the token "each", but the third line begins with entry 22 "unique". Since the final token of the second line is not hyphenated, there are no carryover values from line to line as there are with the first line. Therefore, all of the other values of arg.final at this point are null.

The final value of arg in Table 8 corresponds to the third line of Table 4. This line started with a complete token and ended with a complete token.

Table 7 is the equivalent of the program in Table 1, Table 3, Table 5 and Table 6, written in the C programming language. This program will run on any computer that provides a C compiler, including any member of the Sun Micro Systems 3 and 4 family of minicomputers. This code has also been run on the DEC Vax 7xx family and microVax computers.

### The Display Algorithm

There are two main differences between the line-breaking and display algorithms. First, rather than accumulating the token metrics to determine where a line ending is, this information must have been previously computed and passed into the display algorithm. The information concerning the number of tokens (or parts of tokens) and the cumulative metric information is required at the beginning of the display process. This information is required so that if justification is desired, the appropriate adjustments can be made to the placement of the tokens. Similarly, when certain text-formating modes are desired, the display algorithm must have available to it the width of the tokens to be painted before the first token is displayed. Examples are 'ragged left' mode and modes where the text is centered on a column, page or arbitrary measure. The second difference is that the display algorithm accesses the RasterData in the Tokenprops.TrailerObject (Table 3) to accumulate a display bitmap of a line of text. This is done using the BitBlt machine instruction on the Xerox 6085 Workstation which is similar to raster processing support on most machines. The description of the bitmap that this instruction uses for the source bitmap includes both a width and a bit offset into the bitmap. These parameters allow the painting of only a portion of a token bitmap when a token is broken between two lines, usually by hyphenation. Consider an example where the width of a token bitmap is 30 bits, and the token is hyphenated at a break point 17 bits into the image. To paint the portion of the image prior to the break point, the width would be set to 17 and the offset would be 0. To paint the portion after the break point, the width would be 32 minus 17 or 15 bits, and the offset would be 17 bits. See line 2 of Table 4 and Figure 4 for an example of when this is important.

Painting text a token at a time can now be compared to the same process done a character at a time. In both cases the same number of bits of font (or text image) information is passed to the display, but the performance is significantly faster in the case of a token at a time. The difference in performance is largely a result of the smaller number of times that each word of memory storing the (system) display bitmap needs to be accessed. The number of memory references is much larger when the text is displayed a character at a time. The width of a typical character bitmap is on the order of four to six bits for font sizes normally used for document body text (i.e. text that is not used for special functions such as headings and footnotes). This implies that, for machines with sixteen-bit word lengths, each word of display memory is accessed three to four times while the bitmaps of contiguous characters (as in a word of text) are written into the display bitmap. If a machine has a memory word length of thirty-two bits then each word of memory will be accessed six to eight times while an image is assembled.

The performance difference between painting text a character at a time and a token at a time is even more significant if the text includes characters that require the overstriking of several characters or portions of characters. Examples of where this could occur is accented characters and mathematical symbols that are not normally included in fonts. Once the images of these special characters or symbols are generated and inserted into the token properties, they can be reused as long as the font does not change.

### Modifying Documents

This invention will now be described as applied to a WYSIWYG document editor used for publishing applications. It could also be used for other text-processing applications. The documents processed by this system comprise a sequence of elements consisting of formatting commands (or markups) interspersed with fragments of text. The fragments of text are in turn sequences of tokens. Each element in the document is called a piece, and the entire data structure is called a piece table. A piece that represents a Token. Entry vector (and thus has content that is text) is referred to as a text piece. To facilitate the modification of the document, the individual pieces are linked in both directions with pointers.

### The Selection

The user modifies a document by identifying a portion of the text and then invoking one of the editing operations normally implemented in a WYSIWYG editor or text-processing system. The portion of the text that is operated on is called the selection. The selection may consist of as little as a single character, a series of contiguous characters or words, or even the entire document. The selection is usually indicated by changing the appearance of the text. On systems with a high resolution screen the preferred method is displaying the selection in reverse video.

In addition to having a beginning and an end, the selection also has an insertion point. It is usually at the end of the selection, but can also be at the beginning of the selection. The insertion point is typically identified with a 'blinking' caret. The piece table entry that contains the insertion point is defined as the input focus. Even though visually the input focus may appear to be attached only to text, it is entirely possible that the insertion point may actually be attached to a piece table entry containing commands.

The operations a user can perform on a selection are to delete it, backspace over one or more characters or words beginning at the insertion point, or add characters after the insertion point. Backing up in units of words is referred to as a backword operation. In each case the algorithm that operates on text represented with this invention is somewhat different from the equivalent algorithm for processing a document encoded as a series of characters.

Once one of the operations mentioned above is performed on a selection, the selection is deactivated. This is indicated to the user by deëmphasizing the text in the selection, if any remains, after the operation.

### Resolving Mouse Clicks

Portions of the text are selected by converting the coördinate information from a pointing device into a position in the document. This process is called resolving the position in the document. Virtually all interactive WYSIWYG systems have some form of pointing device. Most commonly the pointing device is a mouse. Much less frequently it is a set of cursor keys.

The pointing device provides coördinate information at regular intervals while the device is active. The process of converting the coördinate information into a position in the document is facilitated by this invention.

The resolving algorithm proceeds in three phases. First, the line of text containing the coördinate is located; next the specific token is identified; and finally the character is located. The editor must provide some way for the resolving software to determine which line of text contains the new coördinate. Typically this is done with a table of line boxes. The information describing the line box is the location (or orientation) of the line, dimension of the line, and beginning offset of the first token on the line.

Once the line is located, the resolving algorithm can enumerate the tokens in the line to determine in which token the coordinate is located. At this point the individual characters can be inspected to determine in which character the coordinate falls.

The table of line boxes is essential if the editor design supports multiple line-setting modes. If the text is set with variable-width spaces, or text that is not aligned along the left side of the column, then the information related to the number and width of the spaces must also be included in the table. On fast processors it is possible to replace the line table with a procedural interface to the pagination logic that returns the information in the nth line box by paginating the appropriate page through the nth line.

By proceeding across the line a token at a time rather than a character at a time, as is classically the case, the resolving process proceeds much faster. In particular, with complex text, such as international or mathematical text that cannot be represented by a single byte per character, the method described here will be significantly faster.

### The Delete Algorithm

The algorithm for deleting a portion of a document encoded as a sequence of tokens is very similar to the algorithm for deleting text stored as a sequence of characters stored in a piece table. In the general case, a deletion is performed on a selection consisting of more than one character where the first and last character in the selection are not in the same piece table entry. The simplest case is when the begining of the selection is just after a space (the beginning of a token) and similarly, when the end of the selection is just before a space. In this case no new tokens are created as a result of the deletion, but as many as two new pieces are created, depending on whether the beginning and end of the selection are in the same piece of text. The encoding of the space immediately after the selection will have to be changed to the space escape variant of the Token.Entry if the space is encoded using the spaceFollows Boolean term in the last token of the selection. If one end of the selection falls on one of the interior characters of the first or last token, then new tokens will result from the deletion. If this is the case, then a changeBase escape Token. Entry may need to be added to the resultant pieces to reflect the base address of each new token.

The text in Figure 5 contains the same text that was previously shown in Table 4. The highlighted portion of the text represents a selection that will result in several new tokens being created when the selection is deleted. For the sake of illuminating the most general case, it is assumed that the new tokens will be located in a different area of memory from the area used for the existing tokens (base address number 1). The deletion will result in two pieces, one for the portion of the text prior to the selection, and a separate piece for the portion after the selection. Table 2 contains the piece table entry for the remaining portion of the paragraph prior to the deletion. Table 9 shows the beginning and end of the initial fragment of the text. (The missing portion of the piece corresponds to the portion of the piece in Table 2). Notice that a changeBase escape Token. Entry is required because the new token is not in the same token props area that the other tokens are in. Table 10 shows the tokens in the second piece table entry. Again, the new token is preceded by a changeBase escape Token. Entry. A second base address change is needed in this piece to set the base address back to the first address space used for the remaining tokens.

### The Modifiable Token. Entry Array and Token Properties

Piece table entries (and the contents of the entry) are typically of fixed length to minimize storage requirements. Insertion, backspace and backword all result in changes to the content of the piece table entry containing the insertion point. It is impractical after each operation to allocate new space for the modified contents, copy the content of the input focus to the new space, update the contents of the new piece to reflect the change, and deällocate the old contents. Performing these operations repeatedly would result in fragmented dynamic memory and inadequate performance. A way to avoid this fragmentation is to identify transient resources that can easily be modified. Specifically, a preällocated Token.Entry array that is arbitrarily long could be substituted for the actual contents of a piece when one of these operations is selected. The length of the array simply has to be adjusted at the end of each operation to reflect the changes.

When the first operation requiring the modifiable entry array is invoked, content of the input focus is copied into the modifiable entry array and a reference to the modifiable content is placed in the input focus. The editing algorithm is then invoked. The contents of the input focus remain in the modifiable space area until an event transpires signalling that no further operations on the modifiable piece can occur. Events of this nature include the user ending the edit session on the document, or moving the selection to another portion of the document. After the last edit is performed, any content remaining in the input focus is made permanent by allocating a new space, copying the content of the modifiable space into the new space, and placing a reference to the new space in the input focus.

Insert and backspace also require a modifiable token property area to avoid similar performance problems resulting from repeatedly allocating and deällocating token properties during rapid operations. A reference to the modifiable token property space is substituted for the last token variant in the modifiable Token. Entry array when the first insert or backspace is invoked. The contents of the modifiable token properties are then either discarded or transferred to a permanent property space depending on the sequence of operations. This will be described in more detail below.

The modifiable Token.Entry array can be of limited length. In general, a length of one thousand tokens will seldom be exhausted, and this length imposes few constraints on the implementation. The modifiable token property space need be long enough to hold only the maximum number of break points the implementation allows.

By convention, the modifiable token property space is defined to be offset one in base address zero. This convention will be used in the editing algorithms described below.

### Backspace

When a backspace operation is invoked, the algorithm checks on at which end of the input focus the insertion point is located. If the insertion point is on the right-hand side of the input focus, then the algorithm proceeds with then next step. When the insertion point is on the lefthand side of the input focus, then the input focus is moved to the next prior piece table entry that contains text. The insertion point is moved to the right-hand side of the input focus. If there are no prior text pieces the algorithm terminates.

Next, a check is made as to whether the content of the input focus has been copied into the modifiable entry array. If the content of the input focus has been copied, then the portion of the algorithm that deletes the last character is invoked. Otherwise, the content of the input focus is copied into the modifiable Token.Entry array. The first step in this process is to replace the address of the text in the input focus with the address of the modifiable entry array. Now the algorithm can proceed to delete a character.

Once the content of the input focus has been copied to the modifiable Token. Entry array, the backspace algorithm begins by locating the last content- bearing entry in the array. A content-bearing entry is a Token.Entry that is not a changeBase variant. The algorithm begins with the last element of the array and proceeds backwards inspecting each successive element. This process terminates when the first content-bearing entry is located. If the entry is a space escape Token. Entry, then the token array is shortened by one to delete the space. The algorithm then terminates since a character has been deleted. Similarly, if the entry located by the scan for a content-bearing entry is a token Token. Entry with the spaceFollows Boolean term set to TRUE, then deleting the character consists of setting the Boolean term to FALSE. The content of the input focus stays the same, since the final content-bearing entry was not eliminated but only changed.

The final case is when the final content-bearing entry is a token Token. Entry that does not have the spaceFollows Boolean term set to TRUE. If the properties for the final token are not already in the modifiable token property area, then the contents are copied and the entry array is updated to reflect this. In general, the content- bearing entry is replaced with two entries. The first is a changeBase escape Token.Entry to set the base address to zero (the modifiable token property area), and the second is a token Token. Entry with an offset of one. Finally, the length of the content of the input focus is updated (usually by incrementing the length by one).

The final portion of the backspace algorithm is the procedure to delete a character when the final element of the modifiable entry array is a token Token. Entry which has already been copied to the modifiable token property area (from a previous operation) and the spaceFollows Boolean TERM is already FALSE. The first step is to determine how many bytes need to be deleted to eliminate the last logical character. International characters, such as accented characters, may be represented by byte sequences longer than one byte. If the resulting deletion does not exhaust the bytes in the token properties, then the properties are updated and the algorithm terminates. If deletion exhausts the bytes in the distinguished token property area, then the length of the distinguished token array is reduced by one and the procedure to locate the first preceding content-bearing entry array element is executed.

### Backword

The first two steps of the backword algorithm are identical to the backspace algorithm: if the insertion point is on the left-hand side of the input focus, then the content of the next prior piece containing text is set as the input focus and the insertion point is moved to the right-hand side of the new input focus. Next, if the content of the input focus is not in the modifiable entry array, then the content is copied into the modifiable array, and a reference to the modifiable entry array is placed in the input focus.

Once the content of the input focus is copied to the modifiable entry array, the backword algorithm locates the last content-bearing entry in the array. This entry must not be a space. Next, a second scan is initiated to locate the next prior space or punctuation mark. The scan logic must include the possibility that a word may be fragmented into two or more contiguous tokens or that the token being deleted is the first token in the document.

Once the right-hand boundary of the backword is identified, all of the subsequent tokens are deleted by adjusting the length of the modifiable token array. Notice that, since the backword algorithm always results in the elimination of an integral number of tokens, no new tokens are created.

### Insert

The insert algorithm also requires the modifiable entry array, so the insert algorithm also begins by determining what content, if any, from the input focus must be moved into the special entry array. If the insertion point is on the left-hand side of the input focus, then a new piece table entry must be created and linked into the table prior to the input focus. The new piece is now made the input focus and the insertion point is moved to the right-hand side of this piece.

If the insertion point is on the right-hand side of the input focus and the content of the input focus is not in the modifiable entry array, then the content of the input focus is copied there and a reference to the modifiable entry array is placed in the input focus.

Now a character can be added to the document. The logic that is executed depends on the class of character. The basic classes are space, letters, and punctuation marks. Punctuation marks are characters that are never included in a token. These are also identified to the line-breaking algorithm to assist it in determining where allowable break points are. In applications where significant amounts of numeric data are expected - such as financial text processing applications - then the implementation may need to treat numeric data in a special way. Since numbers tend to be unique, or nearly unique, the statistical properties that make this invention highly efficient for text will not be realized. The result will, very likely, be very large documents with prohibitive runtime memory requirements. One alternative is to treat tabular data as normal strings of text, or to create a special escape variant that would contain the numeric data.

When the first letter is encountered, the final token in the input focus is inspected. If it is not a reference to the modifiable token properties the reference is added to the end of the piece. This usually involves lengthening the contents of the input focus by two. A changeBase escape variant referring to the space containing the modifiable token properties is added, followed by a Token. Entry referring to the modifiable properties. The metrics, break-point data, display bitmap, and character array should all be initialized to null values. If the final entry in the array is a token variant with the spaceFollows Boolean term set to FALSE, then the entry is replaced with the two entries required for the reference to the modifiable token properties. In this case the contents of the modifiable properties are initialized to be the contents of the token that was replaced.

Now the letter is added to the character array and the font is set to a value that forces a recomputation of the metrics and bitmap. In general, it is recommended that hyphenation of the new token be delayed until a break character (i.e. a space or punctuation mark) is encountered, unless the hardware is very fast.

Processing the second and subsequent (contiguous) letters consists of only the final step of those required for the processing of the first letter: the letter is added to the character array and the font field in the token properties is set to the special value that causes the invalidProps return from the line-breaking algorithm.

When a character that is not a letter is input after one or more letters, or the input operation is terminated, the contents of the modifiable token properties are converted into a permanent token. Since the new token may not have the same base address as the last token before the modifiable token properties, a changeBase escape may be needed.

If the event that terminates the input to the modifiable token properties is a space, then the space should be encoded with the spaceFollows Boolean term in the new token. If a space is input, but no letters are in the modifiable token, then the space escape variant must be used. Similarly, if a punctuation mark is input after one or more letters have been input, then the modifiable token properties must be converted into permanent properties prior to processing the punctuation mark.

### The Search Algorithm

In general, a user searches for a string of text with the expectation that the algorithm will determine whether two strings are equivalent. Equivalence is defined to mean that the encoding for one string can be transformed into the encoding for the other string with no loss of information. Similarly, when searching for combinations of text and commands, the expectation is that the effect of the commands will be recognised independent of the sequence of commands. For example, if the command for initiating bold text is
<BD>
and the command for italic text is
<IT>
then clearly, the effect on the text when the command sequence
<BD><IT>
is the same as
<IT><BD>
Therefore, the two should be interpreted by the search as equivalent. Conceptually, this is equivalent to accumulating the commands in a buffer and inspecting them before the beginning of each text piece.

The equivalence of tokens is intuitive: a word that is split between multiple contiguous tokens must match the same content represented as a single token. The following algorithm will be presented in terms of equivalent tokens. Similarly, the equivalent encoding of a sequence of commands is also natural. Thus, the algorithm for searching when formatting commands are significant (that is that the looks of the search string are included in the search criteria) will also be presented in terms of equivalent commands that are independent of the sequence of commands.

The search consists of processing three special cases: the equivalent token prior to the first delimiter, the equivalent token after the last delimiter, and the rest of the tokens. In this context a delimiter is defined to be a space or punctuation mark. The scan proceeds until a token is identified that is exactly equivalent to, or ends in text that is exactly equivalent to, the first token. The algorithm now processes each successive delimiter and interior token. If the match is exact the scan proceeds. Finally, the last token is compared. A match is identified if the final equivalent token in the search string is a perfect match with the corresponding token in the passage of text being searched. Similarly, the search is successful if the final equivalent token matches the begining of the corresponding token in the text.

A slight generalization is required to define the search algorithm when formating commands in the target string are significant. Before the scan, the source string is converted into tokens and the effective commands are determined. At the beginning of each text piece, the state of the effective command is compared with the corresponding commands in the source string. If the effective command does not match, the comparison fails.

### Search and Replace

The search and replace function is defined in terms of previously-defined edit operations. First, the source and replace strings are converted into a sequence of tokens. Then, the scan of the document is performed. When a match is made, the matched portion of the document is converted into an implied selection. The selection is then deleted using the previously-defined operation. The encoded replace string is then inserted at the insertion point. The scan then proceeds to locate the next match.

### Checking Spelling

The algorithm to check the spelling of the text in a document encoded with this method is very efficient. There are two cases to consider, depending on whether the entire document is checked, or whether only a selected portion of the document is checked.

Prior to processing the document, two temporary data structures are created. The first is a list with an element for each unique token. Each element contains a reference count, and a Boolean field. The elements are initialized with the respective reference count and the value FALSE. The second is a list to retain each misspelled word that is composed of more than one token. This list is initially empty.

Processing the document begins with checking each entry in the document token dictionary against the spelling lexicon. Processing next proceeds to setting the appropriate Boolean field in the temporary list to TRUE for tokens that are identified as misspelled by the spelling lexicon. The document is now scanned for words that are composed of several contiguous tokens. For each instance of a composite token, the temporary reference count for each token in the composite is decremented, then the word is checked against the spelling lexicon. If the word is incorrectly spelled, the word is added to the misspelled list- if it is not already in the list. At the end of the document, words in the list of misspelled composite words are reported to the user. Similarly, token dictionary entries that are marked as misspelled and that have a non-zero temporary reference count are also reported to the user.

In the second case of checking a portion of the text, only a list to contain the words that are misspelled is required. The processing consists of enumerating each word in the selected text, whether or not it is composed of several fragments, then checking the word against the spelling lexicon. Words that are misspelled are added to the misspelled list. After the last token is identified, the misspelled list is reported to the user.

### External Document Representation

The text representation described here, coupled with the piece table, can be used as an extremely compact machine-readable external form. Minimizing the external storage requirements consists of saving the piece table; the memory containing the Token. Entry arrays that the piece table refers to, and a subset of the token properties. Only the portion of the token properties that cannot be recomputed quickly needs to be written into the file. Thus the characters; an array noting the type and position of each break point, and the base address and offset of the properties should suffice. By not storing the break-point array; metric information, and token bitmap image, the property space can be reduced by at least three-quarters.

Typically, for large documents the compaction will be a factor that converges on twice the inverse of the average word length in the document. For standard English the ratio is slightly less than one third. For technical documentation that contains large numbers of longer words, the ratio will improve.

## Claims

1. An iterative method of encoding text comprising a string of atoms being received by a memory, each atom having a width and comprising one or more character codes, said string of atoms at any one point in time comprising a plurality of previous atoms, a current atom and a next atom, said string of atoms comprising words which comprise strings of characters, numerals, punctuation marks and spaces, into a list of tokens and a corresponding array of data blocks stored in said memory, said method comprising the steps of
initializing the memory by starting with a list of zero tokens and zero data blocks and proceeding to create the entire list and array solely with iterations of the method, each iteration comprising the steps of:
determining whether the current atom in said string of atoms is identical to a previous atom in said string,
if so, adding an additional token equal to the token of said previous identical atom to the end of said list of tokens in said memory, and proceeding to the determining step for the next atom,
if not, adding a new and unique token to the end of said list of tokens in said memory, characterised by creating an additional data block in said memory corresponding to said new token comprising the string of characters in said current atom and the width of said current atom, and proceeding to the determining step for the next atom, and, after said encoding is complete, breaking said string of atoms into a sequence of lines of a predetermined length suitable for printing on a printer comprising a current line which is being broken, a next line and previous lines, comprising the steps of:
A. using the token of the current atom to access the corresponding data block,
B. adding the width, in the data block, of the current atom to a running sum of widths on the current line to determine a total width of all atoms on the current line,
C. if the total width is greater than said predetermined length , then,
a. if the previous atom was a space, breaking the current line after the previous atom, otherwise,
b. breaking the current line after the last atom on the current line that was followed by a space, and
D. if said total width is not greater than said predetermined value, proceeding to the next atom, and
E. sending said sequence of lines to said printer.

2. The method of Claim 1 wherein said characters have style, size, weight, stress and capitalization, further comprising the step of defining two atoms as identical when they have the same characters, style, size, weight, stress and capitalization.

3. The method of Claim 1 wherein each word of more than one syllable is separated into partial words comprising one or more beginning partial words and one or more ending partial words of predetermined widths separated by hyphenation points further comprising, for each data block that corresponds to a word, the step of adding the hyphenation points of said word and the widths of each partial word to said data block.

4. The method of Claim 3 further comprising breaking said string of atoms into a sequence of lines of a predetermined length suitable for printing on a printer comprising a current line which is being broken, a next line and previous lines, said method further comprising the steps of:
using the token of the current atom to access the corresponding data block,
adding the width in the data block of the current atom to a running sum of atom widths on the current line to determine a total width of all atoms of the current line,
if the sum of atom widths is not greater than a predetermined value, proceeding to the token of the next atom,
if the sum of widths is greater than said predetermined value by an amount less than a predetermined amount, breaking the line at the end of the current atom and proceeding to the next line,
if the sum of widths exceeds the predetermined value by said predetermined amount, and if the current atom is a hyphenated word, dividing said hyphenated word at a hyphenation point, adding the beginning partial word or words of the hyphenated word to the end of the current line, and starting the next line with the ending partial word or words of the current word.

## Patentansprüche

1. Iteratives Verfahren zum Kodieren von Text, der eine Kette von Atomen enthält, die von einem Speicher empfangen werden, wobei jedes Atom eine Länge besitzt und einen Schriftzeichen-Kode oder mehrere Schriftzeichen-Kodes umfaßt, die Kette von Atomen zu jedem Zeitpunkt eine Vielzahl von vorhergehenden Atomen, ein aktuelles Atom und ein nächstes Atom enthält, die Kette von Atomen Worte umfaßt, welche Reihen von Schriftzeichen, Zahlen, Satzzeichen und Zwischenräumen umfassen zu einer Liste von Symbolen und einer entsprechenden Anzahl von Datenblöcken, die in dem Speicher gespeichert sind, wobei das Verfahren die Schritte umfaßt:
Initialisieren des Speichers durch Starten mit einer Liste von Null-Symbolen und Null-Datenblöcken und Fortfahren zum Schaffen der gesamten Liste und Anordnung nur mit Iterationen des Verfahrens, wobei jede Iteration die Schritte umfaßt:
Bestimmen, ob das aktuelle Atom in der Reihe von Atomen mit einem vorhergehenden Atom in der Reihe identisch ist,
falls das der Fall ist, Hinzufügen eines zusätzlichen Symbols gleich dem Symbol des vorhergehenden identischen Atoms an dem Ende der Symbolliste in dem Speicher, und Fortfahren zu dem Bestimmungsschritt für das nächste Atom,
falls nicht, Hinzufügen eines neuen und eindeutigen Symbols an dem Ende der Liste von Symbolen in dem Speicher, **gekennzeichnet durch** Schaffen eines zusätzlichen Datenblocks in dem Speicher, der dem neuen Symbol entspricht, das die Schriftzeichenreihe in dem aktuellen Atom und die Breite des aktuellen Atoms umfaßt, und Fortfahren zu dem Bestimmungsschritt für das nächste Atom, und, nachdem das Kodieren abgeschlossen ist, Umbrechen der Reihe von Atomen in eine Abfolge von Zeilen einer vorgegebenen Länge, die zum Druck an einem Drucker geeignet ist, die eine Druckzeile umfaßt, die umgebrochen ist, eine nächste Zeile und vorhergehende Zeilen, mit den Schritten:
A. Benutzen des Symbols des aktuellen Atoms zum Zugreifen auf den entsprechenden Datenblock,
B. Addieren der Länge des aktuellen Atoms in dem Datenblock zu einer laufenden Summe von Längen an der aktuellen Zeile, um eine Gesamtlänge aller Atome in der aktuellen Zeile zu bestimmen,
C. falls die Gesamtlänge größer als die vorgegebene Länge ist,
a. falls das vorhergehende Atom ein Zwischenraum war, Umbrechen der aktuellen Zeile nach dem vorangehenden Atom, sonst
b. Umbrechen der aktuellen Zeile nach dem letzten von einem Zwischenraum gefolgten Atom in der aktuellen Zeile, und
D. falls die Gesamtlänge nicht größer als der vorgegebene Wert ist, Fortsetzen zu dem nächsten Atom, und
E. Senden der Zeilenfolge zu dem Drucker.

2. Verfahren nach Anspruch 1, bei dem die Schriftzeichen Stil, Größe, Gewicht, Spannung und Kapitalisation (Großschreibung) besitzen und das weiter den Schritt umfaßt des Definierens von zwei Atomen als identisch, wenn sie die gleichen Schriftzeichen, Stile, Größen, Gewichte, Spannungen, und Kapitalisationen besitzen.

3. Verfahren nach Anspruch 1, bei dem jedes Wort von mehr als einer Silbe in Teilworte aufgeteilt wird, welche ein oder mehrere Beginn-Teilwort(e) und ein oder mehrere End-Teilwort(e) von vorgegebenen Längen umfassen, getrennt durch Silbentrennstrich-Stellen, und das weiter für jeden Datenblock, der einem Wort entspricht, den Schritt des Hinzufügens der Silbentrennstrich-Stellen des Wortes und der Länge jedes Teilwortes zu dem Datenblock umfaßt.

4. Verfahren nach Anspruch 3, das weiter umfaßt das Umbrechen der Kette von Atomen in eine Folge von Zeilen einer vorgegebenen Länge, die für das Drucken an einem Drucker geeignet ist, und eine aktuelle Zeile, die umgebrochen wird, eine nächste Zeile und vorherige Zeilen umfaßt, wobei das Verfahren weiter die Schritte umfaßt:
Benutzen des Symbols des aktuellen Atoms zum Zugreifen zu dem entsprechenden Datenblock,
Hinzufügen der Länge des Datenblockes des aktuellen Atoms zu einer laufenden Summe von Atomlängen an der aktuellen Zeile zur Bestimmung einer Gesamtlänge von allen Atomen in der aktuellen Zeile,
falls die Summe der Atomlängen nicht größer als ein vorgegebener Wert ist, Fortfahren zu dem Symbol des nächsten Atoms,
falls die Summe der Längen größer als der vorgegebene Wert ist um einen Betrag, der geringer als ein vorgegebener Betrag ist, Umbrechen der Zeile an dem Ende des aktuellen Atoms und Fortfahren zur nächsten Zeile,
falls die Summe der Längen den vorgegebenen Wert um die vorgegebene Größe übertrifft, und falls das aktuelle Atom ein mit Silbentrennstrichen versehenes Wort ist, Unterteilen des mit Silbentrennstrichen versehenen Wortes an einer Silbentrennstrich-Stelle, Hinzufügen des beginnenden Teilwortes oder der -Worte des mit Silbentrennstrichen versehenen Wortes zu dem Ende der aktuellen Zeile und Beginnen der nächsten Zeile mit dem endenden Teilwort oder den endenden Teilworten des aktuellen Wortes.

## Revendications

1. Procédé itératif pour coder un texte comprenant une chaîne d'atomes reçue par une mémoire, chaque atome ayant une largeur et comprenant un ou plusieurs codes de caractères, ladite chaîne d'atomes, à un instant quelconque, comprenant une pluralité d'atomes précédents, un atome courant et un atome suivant, ladite chaîne d'atomes comprenant des mots qui comprennent des chaînes de caractères, des chiffres, des marques de ponctuation et des espaces, en une liste de jetons et un tableau correspondant de blocs de données stockés dans ladite mémoire, ledit procédé comprenant les étapes qui consistent :
à initialiser la mémoire en commençant par une liste de zéro jeton et de zéro bloc de données et à procéder à la création de la totalité de la liste et du tableau uniquement par des itérations du procédé, chaque itération comprenant les étapes qui consistent :
à déterminer si l'atome courant dans ladite chaîne d'atomes est identique à un atome précédent dans ladite chaîne,
si cela est le cas, à ajouter un jeton supplémentaire égal au jeton dudit atome précédent à la fin de ladite liste de jetons dans ladite mémoire, et à procéder à l'étape de détermination concernant l'atome suivant,
si cela n'est pas le cas, à ajouter un jeton nouveau et unique à la fin de ladite liste de jetons dans ladite mémoire, caractérisé par le fait qu'il consiste à créer un bloc de données supplémentaire dans ladite mémoire, qui correspond au nouveau jeton comprenant la chaîne de caractères dans ledit atome courant et la largeur dudit atome courant, et à procéder à l'étape de détermination concernant l'atome suivant, et, après que ledit codage est achevé, à scinder ladite chaîne d'atomes en une séquence de lignes de longueur prédéterminée convenant pour l'impression sur une imprimante, comprenant une ligne courante qui est scindée, une ligne suivante et des lignes précédentes, ceci comprenant les étapes qui consistent :
A. à utiliser le jeton de l'atome courant pour accéder au bloc de données correspondant,
B. à ajouter, dans le bloc de données, la largeur de l'atome courant à une somme glissante des largeurs de la ligne courante pour déterminer une largeur totale de tous les atomes sur la ligne courante,
C. si la largeur totale est supérieure à ladite longueur prédéterminée, alors,
a. si l'atome précédent était un espace, à scinder la ligne courante après l'atome précédent, et dans le cas contraire,
b. à scinder la ligne courante après le dernier atome de la ligne courante, qui était suivi d'un espace, et
D. si ladite largeur totale n'est pas supérieure à ladite valeur prédéterminée, à passer à l'atome suivant, et
E. à envoyer ladite séquence de lignes à ladite imprimante.

2. Procédé selon la revendication 1, dans lequel lesdits caractères ont un style, une taille, un poids, une force et une capitalisation, comprenant en outre l'étape qui consiste à définir deux atomes comme étant identiques lorsqu'ils ont les mêmes caractères, style, taille, poids, force et capitalisation identiques.

3. Procédé selon la revendication 1, dans lequel chaque mot de plus d'une syllabe est séparé en des mots partiels comprenant un ou plusieurs mots partiels de début et un ou plusieurs mots partiels de fin de largeurs prédéterminées, séparés par des points de césure, comprenant en outre, pour chaque bloc de données qui correspond à un mot, l'étape consistant à ajouter les points de césure dudit mot et les largeurs de chaque mot partiel, audit bloc de données.

4. Procédé selon la revendication 3, comprenant en outre la scission de ladite chaîne d'atomes en une séquence de lignes de longueur prédéterminée convenant à une impression sur une imprimante comprenant une ligne courante qui est scindée, une ligne suivante et des lignes précédentes, ledit procédé comprenant en outre les étapes qui consistent :
à utiliser le jeton de l'atome courant pour accéder au bloc de données correspondant,
à ajouter dans le bloc de données, la largeur de l'atome courant à une somme glissante de largeurs d'atomes de la ligne courante, pour déterminer une largeur totale de tous les atomes de la ligne courante,
si la somme des largeurs d'atomes ne dépasse pas une valeur prédéterminée, à passer au jeton de l'atome suivant,
si la somme des largeurs dépasse ladite valeur prédéterminée d'une quantité plus faible qu'une quantité prédéterminée, à scinder la ligne à la fin de l'atome courant et à passer à la ligne suivante,
si la somme des largeurs dépasse la valeur prédéterminée de ladite quantité prédéterminée, et si l'atome courant est un mot contenant un trait d'union, à diviser ledit mot contenant un trait d'union en un point de césure, à ajouter le mot ou les mots partiel(s) de début du mot contenant un trait d'union à la fin de la ligne courante, et à commencer la ligne suivante par le mot ou les mots partiel(s) de fin du mot courant.
